# EUROPÄISCHE PATENTANMELDUNG

(11) **EP 2 720 011 A2**
(43) Veröffentlichungstag der Anmeldung: **16.04.2014**
(21) Anmeldenummer: 13187746.6
(22) Anmeldetag: 08.10.2013
(51) Int. Cl.: G01H 1/00

(54) **Sensoranordnung und Verfahren zum Herstellen einer Sensoranordnung**

(30) Priorität: 09.10.2012 DE 102012109580
(71) Anmelder: Prüftechnik Dieter Busch AG, 85737 Ismaning (DE)
(72) Erfinder: Lysen, Heinrich, 85748 Garching (DE)

(57) **Zusammenfassung**

Eine Sensoranordnung (10) umfasst einen Schwingungssensor (11), der ein Kabel (13) umfasst und frei von einem Metallgehäuse ist, und eine Aufnahmevorrichtung (12), die mit dem Schwingungssensor (11) lösbar verbunden ist und ausgelegt ist, den Schwingungssensor (11) mechanisch zu schützen und zu fixieren.

## Beschreibung

Die Erfindung betrifft eine Sensoranordnung, eine Maschine mit einer Sensoranordnung und ein Verfahren zum Herstellen einer Sensoranordnung.

Eine Sensoranordnung umfasst üblicherweise einen Sensor, der an einer Messstelle angebracht ist.

Dokument DE 29916849 U1 beschreibt eine Befestigungsvorrichtung für einen Sensor mit einem Gehäuse und einem Kabel. Der Sensor ist als optoelektronischer Sensor ausgebildet und wird in ein Befestigungsteil eingeschoben. Das Befestigungsteil ist mit zwei Befestigungsschrauben an einer Konsole angebracht. Durch Betätigen der Befestigungsschrauben wird das Gehäuse des Sensors festgeklemmt.

Eine Aufgabe der vorliegenden Erfindung ist es, eine Sensoranordnung, eine Maschine mit einer Sensoranordnung sowie ein Verfahren zum Herstellen einer Sensoranordnung bereitzustellen, die sich für die Messung von Schwingungen eignen.

Die Aufgabe wird mit den Gegenständen der Patentansprüche 1 und 11 sowie dem Verfahren gemäß Patentanspruch 12 gelöst. Weiterbildungen und Ausgestaltungen sind jeweils Gegenstand der abhängigen Ansprüche.

In einer Ausführungsform umfasst eine Sensoranordnung einen Schwingungssensor und eine Aufnahmevorrichtung. Der Schwingungssensor umfasst ein Kabel. Der Schwingungssensor ist frei von einem Metallgehäuse. Die Aufnahmevorrichtung ist mit dem Schwingungssensor lösbar verbunden. Weiter ist die Aufnahmevorrichtung ausgelegt, den Schwingungssensor mechanisch zu schützen und zu fixieren.

Vorteilhafterweise fixiert zur Sensormontage die Aufnahmevorrichtung den Schwingungssensor. Durch die Fixierung werden die Schwingungen, mit denen die Aufnahmevorrichtung beaufschlagt ist, auf den Schwingungssensor übertragen und können so detektiert werden. Der Schwingungssensor detektiert somit Schwingungen am Ort der Aufnahmevorrichtung. Vorteilhafterweise schützt die Aufnahmevorrichtung den Schwingungssensor mechanisch. Somit führen auch raue Umgebungsbedingungen, wie sie im Betrieb oder während der Wartung einer Maschine herrschen können, nicht zu einem Ausfall des Schwingungssensors.

In einer Ausführungsform umfasst eine Maschine die Sensoranordnung. Die Aufnahmevorrichtung wird an der Maschine mittels eines Befestigungsmittels fixiert. Das Befestigungsmittel kann beispielsweise eine Schraube, mit der die Aufnahmevorrichtung an der Maschine angeschraubt ist, sein. Alternativ kann das Befestigungsmittel ein Kleber oder ein Lot sein, die sich zwischen der Aufnahmevorrichtung und der Maschine befinden. Alternativ kann das Befestigungsmittel ein Bolzen sein. Dabei kann der Bolzen aus der Maschine herausragen. Die Aufnahmevorrichtung kann auf den Bolzen aufgesteckt und mit einer Mutter fixiert werden.

In einer Ausführungsform umfasst der Schwingungssensor ein Kunststoffgehäuse, aus dem das Kabel herausgeführt ist.

In einer Weiterbildung ist das Kunststoffgehäuse elektrisch isolierend. Das Kunststoffgehäuse kann wasserdicht sein. Das Kunststoffgehäuse kann staubdicht sein.

In einer Ausführungsform ist das Kunststoffgehäuse aus einem Duroplast, einem Thermoplast oder einem Kompositwerkstoff hergestellt. Das Kunststoffgehäuse kann auch aus einem faserverstärktem Kunststoff, beispielsweise aus einem Glasfasergewebe und einem Epoxidharz, hergestellt sein.

Das Kunststoffgehäuse kann durch ein Spritzgussverfahren hergestellt werden.

In einer Ausführungsform umfasst der Schwingungssensor eine Platine. Die Platine kann mit dem Kabel verbunden sein. Auf der Platine kann mindestens ein Sensorelement angeordnet sein. Das wasser- und staubdichte Kunststoffgehäuse verhindert das Vordringen von Wasser und Staub zu dem mindestens einen Sensorelement. Das mindestens eine Sensorelement kann ein Sensorelementgehäuse aufweisen, das heißt vorgehäust sein.

In einer Ausführungsform wird das Kunststoffgehäuse derart hergestellt, dass die Platine und ein Ende des Kabels mittels Spritzgussverfahren umspritzt werden. Der Schwingungssensor ist somit in Insert-Technik hergestellt. Das Kunststoffgehäuse schließt bevorzugt keine Luft oder nur geringe Luftanteile ein. Geringe Luftanteile können vorteilhaft sein, um mechanische Bewegungen des Sensorelements, etwa eines Piezosensorelements, zu ermöglichen. Die Platine kann vollständig umspritzt sein. Das Kunststoffgehäuse schließt somit das mindestens eine Sensorelement ein. Alternativ kann die Platine teilweise umspritzt sein. Dabei umschließen das Kunststoffgehäuse und die Platine das mindestens eine Sensorelement.

In einer alternativen Ausführungsform wird das Kunststoffgehäuse hergestellt und anschließend mit der Platine und dem Ende des Kabels verbunden. Die Verbindung kann beispielsweise mittels Kleben, Aufschieben, Einrasten oder Zusammenschrauben durchgeführt werden. Zwischen dem Kunststoffgehäuse und der Platine kann Luft eingeschlossen sein.

In einer Ausführungsform ist das Kunststoffgehäuse als Platinenaufbau realisiert, welcher die Platine, auf der das Sensorelement angeordnet ist, und mindestens eine weitere Platine aufweist. Das Kunststoffgehäuse kann als Platinenstapel ausgebildet sein.

In einer Ausführungsform wird zur Herstellung des Kunststoffgehäuses flüssiger Kunststoff, etwa eine Vergussmasse, auf die Platine aufgetragen und ausgehärtet.

Mit Vorteil lassen sich durch die Herstellung mittels Kunststofftechnik ein geringes Gewicht und eine kleine Baugröße des Schwingungssensors erzielen.

In einer Ausführungsform umfasst ein Verfahren zum Herstellen einer Sensoranordnung das Befestigen einer Aufnahmevorrichtung an einer Maschine, deren Schwingungen zu überwachen sind. Weiter wird ein Schwingungssensor in die Aufnahmevorrichtung eingefügt. Der Schwingungssensor umfasst ein Kabel und ist frei von einem Metallgehäuse. Dabei ist die Aufnahmevorrichtung mit dem Schwingungssensor lösbar verbunden. Die Aufnahmevorrichtung ist ausgelegt, den Schwingungssensor mechanisch zu schützen und an der Maschine zu fixieren. Vorteilhafterweise können mit dem Schwingungssensor Schwingungen der Maschine überwacht werden. Mit Vorteil bewirkt die Aufnahmevorrichtung einen mechanischen Schutz des Schwingungssensors, so dass Schwingungen auch in einer rauen Umgebung gemessen werden können. Der Schwingungssensor ist mit Vorteil klein, hat ein geringes Gewicht, ist gut geschützt und leicht zu installieren sowie auszutauschen.

In einer Ausführungsform wird der Schwingungssensor dadurch in die Aufnahmevorrichtung eingefügt, dass der Schwingungssensor in die Aufnahmevorrichtung eingeschraubt, angeschraubt, eingeklickt, eingerastet, eingelegt oder eingepresst wird.

In einer Ausführungsform wird zuerst die Aufnahmevorrichtung an der Maschine befestigt und anschließend der Schwingungssensor in die Aufnahmevorrichtung eingefügt. In einer alternativen Ausführungsform wird zuerst der Schwingungssensor in die Aufnahmevorrichtung eingefügt und anschließend die Aufnahmevorrichtung an der Maschine befestigt.

In einer Ausführungsform kann der Schwingungssensor wieder von der Aufnahmevorrichtung gelöst werden, ohne den Schwingungssensor zu zerstören und ohne die Aufnahmevorrichtung zu zerstören. Danach kann beispielsweise die Maschine einer Revision unterzogen, repariert oder gereinigt werden. Anschließend wird der Schwingungssensor wieder in die Aufnahmevorrichtung eingefügt.

Alternativ kann der Schwingungssensor bis zum Eintreten eines Defekts oder bis zum Ende der Lebensdauer des Schwingungssensors betrieben werden. Anschließend wird der Schwingungssensor aus der Aufnahmevorrichtung entfernt und ein weiterer Schwingungssensor in die Aufnahmevorrichtung eingefügt. Da die Aufnahmevorrichtung fest mit der Maschine verbunden ist, misst der weitere Schwingungssensor an derselben Messstelle die Schwingungen der Maschine wie der bisherige Schwingungssensor. Somit wird ein schneller und einfacher Austausch des Schwingungssensors erreicht.

Die Erfindung wird im Folgenden an mehreren Ausführungsbeispielen anhand der Figuren näher erläutert. Funktions- beziehungsweise wirkungsgleiche Bauteile oder Komponenten tragen gleiche Bezugszeichen. Insoweit sich Bauteile oder Komponenten in ihrer Funktion entsprechen, wird deren Beschreibung nicht in jeder der folgenden Figuren wiederholt. Es zeigen:
- Figuren 1A und 1B, 2A und 2B, 3A und 3B, 4, 5A:
- und 5B sowie 6A bis 6C: beispielhafte Ausführungsformen einer Sensoranordnung und

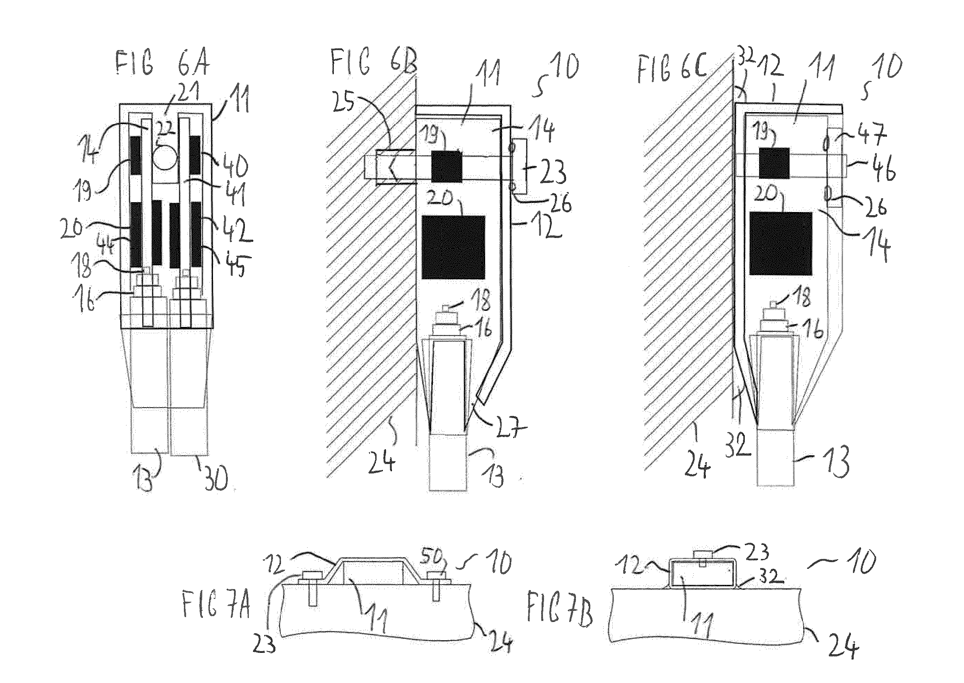

- Figuren 7A und 7B: beispielhafte Ausführungsformen einer Maschine mit einer Sensoranordnung.

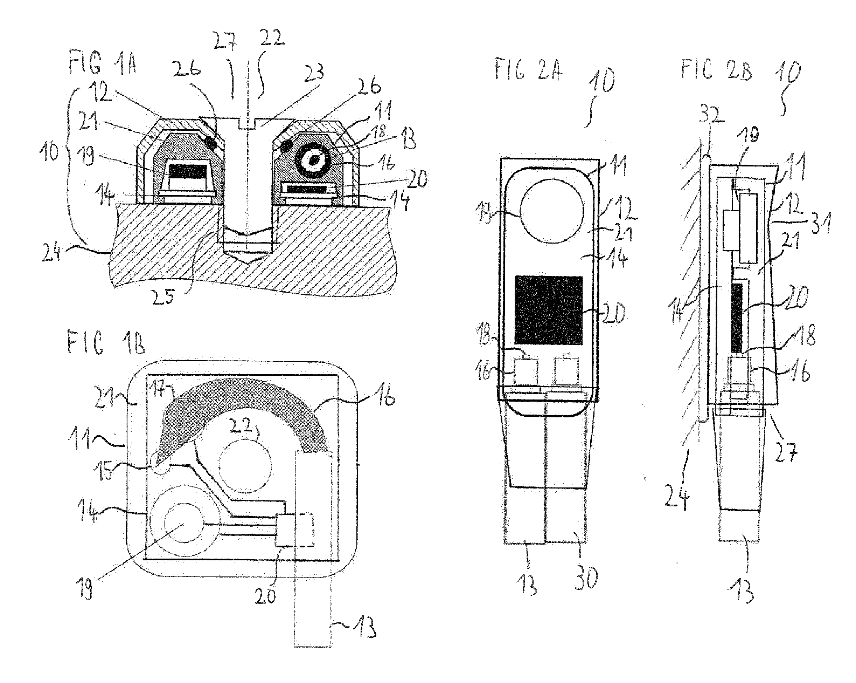

Figuren 1A und 1B zeigen eine beispielhafte Ausführungsform einer Sensoranordnung. Die Sensoranordnung 10 umfasst einen Schwingungssensor 11 und eine Aufnahmevorrichtung 12. Figur 1A zeigt einen Querschnitt durch den Schwingungssensor 11 und die Aufnahmevorrichtung 12, während Figur 1B eine Aufsicht auf den Schwingungssensor 11 zeigt. Der Schwingungssensor 11 weist ein Kabel 13 auf. Das Kabel 13 ist als Koaxialkabel realisiert. Weiter weist der Schwingungssensor 11 eine Platine 14 auf, die mit dem Kabel 13 elektrisch leitend verbunden ist. Die Platine 14 kann als Leiterplatte bezeichnet werden. Dabei ist an einer ersten Verbindungsstelle 15 ein Außenleiter 16 des Kabels 13 und an einer zweiten Verbindungsstelle 17 ein Innenleiter 18 des Kabels 13 an Leiterbahnen der Platine 14 angeschlossen. Das Anschlusskabel 13 ist in den Schwingungssensor 11 integriert. Weiter umfasst der Schwingungssensor 11 ein Sensorelement 19, das auf der Platine 14 angeordnet ist. Der Schwingungssensor 11 ist als inertialer Schwingungssensor implementiert. Somit hat das Sensorelement 19 eine träge Masse und gibt ein Messsignal in Abhängigkeit von einer Lageänderung der trägen Masse relativ zur Platine 14 ab. Das Sensorelement 19 ist als Piezosensorelement realisiert. Zusätzlich ist auf der Platine 14 eine Verarbeitungsschaltung 20 der Sensoranordnung 11 angeordnet. Die Verarbeitungsschaltung 20 ist elektrisch leitend mit dem Sensorelement 19 und dem Kabel 13 verbunden. Die Verarbeitungsschaltung 20 verarbeitet das Messsignal und gibt ein verarbeitetes Messsignal an das Kabel 13 ab. Der Schwingungssensor 11 erhält elektrische Energie über eine zwischen dem Außenleiter 16 und dem Innenleiter 18 anliegende Gleich- oder Wechselspannung.

Der Schwingungssensor 11 umfasst ein Kunststoffgehäuse 21. Das Kunststoffgehäuse 21 ist mittels einer Vergussmasse hergestellt. Das Kunststoffgehäuse 21 ist als staubdichtes, wasserdichtes und elektrisch isolierendes Kunststoffgehäuse realisiert. Aus dem Kunststoffgehäuse 21 ist das Kabel 13 herausgeführt. Das Kabel 13 ist fest mit der Platine 14 und dem Kunststoffgehäuse 21 verbunden. Der Schwingungssensor 11 weist eine Ausnehmung 22 auf. Die Ausnehmung 22 ist in der Mitte des Schwingungssensors 11 angeordnet. Der Schwingungssensor 11 weist eine näherungsweise quadratische Grundfläche auf. Der Schwingungssensor 11 weist keine metallische mechanische Schutzfunktion auf. Der Schwingungssensor 11 ist somit frei von einem Metallgehäuse. Die äußere Hülle des Schwingungssensors 11 ist frei von einem Metall und besteht aus dem Kunststoffgehäuse 21 und/oder der Platine 14. Daher kann der Schwingungssensor 11 klein und leicht ausgeführt werden. Das Gewicht des Schwingungssensors 11 beeinflusst die Messung der Schwingungen höchstens geringfügig.

Die Aufnahmevorrichtung 12 kann als Gehäuse bezeichnet werden. Die Aufnahmevorrichtung 12 ist als Schutzmantel realisiert. Die Aufnahmevorrichtung 12 ist aus Edelstahl. Die Aufnahmevorrichtung 12 ist näherungsweise als ein Zylinder ausgebildet. Die Aufnahmevorrichtung 12 weist eine Ausnehmung 27 auf. Darüber hinaus weist die Sensoranordnung 10 eine Schraube 23 auf, die durch die Ausnehmung 22 des Schwingungssensors 11 und die Ausnehmung 27 der Aufnahmevorrichtung 12 gesteckt wird. Eine Maschine 24 weist eine Gewindebohrung 25 auf, in die die Schraube 23 hineingeschraubt wird. Der Schwingungssensor 11 ist mittels der Schraube 23 und der Aufnahmevorrichtung 12 an der Maschine 24 angeschraubt. Die Schraube 23 ist ein Befestigungsmittel zur Fixierung der Aufnahmevorrichtung 12 an der Maschine 24. Die Aufnahmevorrichtung 12 ist derart ausgeformt, dass der Schwingungssensor 11 in ihr Platz findet. Eine Feder 26 ist zwischen der Aufnahmevorrichtung 12 und dem Schwingungssensor 11 angeordnet. Die Feder 26 ist als Anpressgummifeder realisiert. Die Aufnahmevorrichtung 12 überträgt Kraft auf den Schwingungssensor 11 mittels der Feder 26. Der Schwingungssensor 11 ist ohne Ankoppelprobleme formschlüssig und/oder kraftschlüssig mit der Maschine 24 verbunden. Die Masse der Aufnahmevorrichtung 12, das heißt die Masse des Schutzmantels, belastet nicht die lösbare Verbindung zwischen dem Schwingungssensor 11 und der Maschine 24. Die Aufnahmevorrichtung 12, das heißt der Schutzmantel, ist dafür ausgelegt, 7 Joule Schlagenergie vom Schwingungssensor 11 fernzuhalten. Die Aufnahmevorrichtung 12 bewirkt einen stabilen mechanischen Schutz des Schwingungssensors 11.

Die Platine 14 ist parallel zur Maschine 24 angeordnet. Eine Flächennormale auf der Platine 14 ist parallel zu einer Flächennormale einer Oberfläche der Maschine 24. Der Schwingungssensor 11 mit dem Kabel 13 wird von der Maschine 24 gelöst, beispielsweise wenn die Maschine 24 einer Revision unterzogen wird. Die Stromleitungen des Schwingungssensors 11 sind von der Maschine 24 isoliert. Die Isolation des Schwingungssensors 11 von der Maschine 24 wird durch einen Außenmantel des Kabels 13, das Kunststoffgehäuse 21 und die Platine 14 realisiert. Die Aufnahmevorrichtung 12 bewirkt Halt und Schutz für den Schwingungssensor 11. Die Platine 14 ist als glasfaserverstärkte Epoxid-Leiterplatte ausgebildet. Die Platine 14 bewirkt eine Schwingungsübertragung von der Maschine auf das Sensorelement 19. Zusätzlich erfolgt eine elektrische und thermische Abschirmung des Sensorelements 19 von der Maschine 24 durch die Platine 14.

Der Schwingungssensor 11 misst die Schwingungen der Maschine 24. Der Schwingungssensor dient der Überwachung der Maschine 24. Der Schwingungssensor 11 ist an einem geeigneten Messort oder Messstelle an der auf Schwingungen zu vermessenden Maschine 24 angebracht. Die Maschine 24 kann als Energie- und/oder Industriemaschine realisiert sein. Der Schwingungssensor 11 ist staubdicht und wasserdicht ausgebildet. Somit ist das Kunststoffgehäuse 21 staub- und wasserdicht. Das mittlere spezifische Gewicht der verwendeten Materialien des Schwingungssensors 11 ist kleiner als 3 g/cm³. Dabei zählen Hohlräume des Schwingungssensors 11 nicht als Material. Anders ausgedrückt ist das Gewicht des Schwingungssensors 11 dividiert durch das Volumen des Schwingungssensors 11 kleiner als 3 g/cm³, wobei Hohlräume des Schwingungssensors 11 nicht berücksichtigt sind. Die Hohlräume sind mit Luft, Gas oder Vakuum gefüllt. Bei der Berechnung des Gewichts und des Volumens des Schwingungssensors 11 wird der Teil des Kabels 13 berücksichtigt, der sich innerhalb der Aufnahmevorrichtung 12 befindet. Der sich außerhalb der Aufnahmevorrichtung 12 befindende Teil des Kabels 13 wird nicht berücksichtigt. Die im Schwingungssensor 11 verwandten Materialien sind bevorzugt Verbundmaterialien wie metallbeschichtetes Glasfaser-Epoxid. Die Materialien des Schwingungssensors 11 sind so ausgewählt, dass die mittlere Dichte aller Komponenten des Schwingungssensors 11 ohne enthaltene Luft und ohne die Aufnahmevorrichtung 12 kleiner als 3 g/cm³ ist. Die Dichte der Materialien ist folglich kleiner 3 g/cm³. Dadurch wird eine Beeinflussung des Schwingungsverhaltens des Messortes an der Maschine 24 durch die träge Masse der Sensoranordnung 10 verringert.

Die Sensoranordnung 10, die im Condition Monitoring verwendet wird, ist mit der Schraubverbindung mit der zu überwachenden Maschine 24 verbunden. Die Aufnahmevorrichtung 12 bewirkt eine Schwingungsübertragung von der Maschine 24 zum Schwingungssensor 11. Eine besonders zuverlässige Ankopplung des Schwingungssensors 11 an die Maschine 24 wird erreicht, indem eine Bohrung 25 in ein Gehäuse der Maschine 24 mit einem Gewinde versehen wird. In die Gewindebohrung 25 wird die die Aufnahmevorrichtung 12 und den Schwingungssensor 11 haltende Schraube 23 eingeschraubt. Die Aufnahmevorrichtung 12 hält Umwelteinflüsse wie Nässe, Schmutz und Schläge vom Schwingungssensor 11 ab. Der Anpressdruck bleibt bei der Schraubbefestigung der Aufnahmevorrichtung 12 auch bei einer Druckbelastung auf die von der Maschine 24 abgewandte Seite der Aufnahmevorrichtung 12 konstant. Die Aufnahmevorrichtung 12 dient dem Schutz des Schwingungssensors 11 vor Staub, Schmutz, Öl, Feuchtigkeit und mechanischer Belastung oder Beschädigung.

In einer alternativen, nicht gezeigten Ausführungsform weist der Schwingungssensor 11 eine Buchse auf. Das Kabel 13 weist einen Stecker auf, der in die Buchse des Schwingungssensors 11 hineingesteckt werden kann.

In einer alternativen, nicht gezeigten Ausführungsform wird ein Bolzen auf das Gehäuse der Maschine 24 geschweißt. Der Bolzen ist als Stehbolzen realisiert. Die dazu passende Aufnahmevorrichtung 12 wird dann auf den Bolzen aufgesteckt und mit einer Mutter gesichert. Die Mutter wird mit einem vorbestimmten Drehmoment, das eine optimale Kopplung gewährleistet, angezogen.

Figuren 2A und 2B zeigen eine weitere beispielhafte Ausführungsform der Sensoranordnung 10, die eine Weiterbildung der in Figur 1A und 1B gezeigten Ausführungsform ist. Während Figur 2A eine Aufsicht der Sensoranordnung 10 zeigt, ist in Figur 2B ein Querschnitt durch die Sensoranordnung 10 dargestellt. Der Schwingungssensor 11 ist als Quader ausgebildet. Eine Länge des Schwingungssensors 11 ist dabei mindestens doppelt so groß wie eine Breite und eine Höhe des Schwingungssensors 11. Der Schwingungssensor 11 weist ein weiteres Kabel 30 auf. Das weitere Kabel 30 ist in den Schwingungssensor 11 integriert. Das weitere Kabel 30 umfasst ebenfalls einen Innenleiter und einen Außenleiter. Das Kabel 13 sowie das weitere Kabel 30 sind als Koaxialkabel realisiert. Das Sensorelement 19 ist als Piezosensorelement ausgebildet. Der Schwingungssensor 11 misst Schwingungen der Maschine 24 in einem Frequenzbereich zwischen 10 Hz und 20 kHz. Der Schwingungssensor 11 ist somit als Hochfrequenzsensor implementiert.

Die Aufnahmevorrichtung 12 ist als Schutztasche ausgebildet. Die Aufnahmevorrichtung 12 ist ebenfalls quaderförmig. Der Schwingungssensor 11 ist in die Aufnahmevorrichtung 12 steckbar. Dazu weist die quaderförmige Aufnahmevorrichtung 12 die Ausnehmung 27 auf einer Seite auf, durch die der Schwingungssensor 11 gesteckt wird. Die Aufnahmevorrichtung 12 ist auf der der Maschine 24 zugewandten Seite verschlossen. Die Aufnahmevorrichtung 12 weist ein federndes Element 31 auf. Die Seite der Aufnahmevorrichtung 12, welche das federnde Element 31 aufweist, liegt derjenigen Seite der Aufnahmevorrichtung 12 gegenüber, die an der Maschine 24 angebracht ist. Durch die Realisierung der Aufnahmevorrichtung 12 aus Edelstahl wird eine gute Federwirkung des federnden Elements 31 erzielt werden. Die Aufnahmevorrichtung 12 wird auf die Maschine 24 aufgeklebt. Das Befestigungsmittel zur Verbindung der Aufnahmevorrichtung 12 mit der Maschine 24 ist als Kleber 32 realisiert. Der Kleber 32 befindet sich somit zwischen der Aufnahmevorrichtung 12 und der Maschine 24.

Nach dem Aushärten des Klebers 32 wird der Schwingungssensor 11 in die Aufnahmevorrichtung 12 gesteckt. Die Sensoranordnung 11 ist somit lösbar in die als Schutztasche implementierte Aufnahmevorrichtung 12 eingeschoben. Der Schwingungssensor 11 wird in die Aufnahmevorrichtung 12 eingepresst. Um den Schwingungssensor 11 im Falle eines Defektes auszutauschen oder bei einer Reinigung der Maschine 24 wird der Schwingungssensor 11 aus der Aufnahmevorrichtung 12 gezogen. Der Schwingungssensor 11 kann somit von der Aufnahmevorrichtung 12 entfernt werden. Die Aufnahmevorrichtung 12 verbleibt beim Entfernen des Schwingungssensors 11 an der Maschine 24. Anschließend kann derselbe Schwingungssensor 11 oder ein weiterer Schwingungssensor in die Aufnahmevorrichtung 12 gesteckt werden. Die Aufnahmevorrichtung 12 hat somit die Funktion einer an der Maschine 24 angebrachten Schutztasche. Die Aufnahmevorrichtung 12 erzielt somit eine formschlüssige oder kraftschlüssige Kopplung des Schwingungssensors 11 an die Maschine 24.

Die als Schutztasche realisierte Aufnahmevorrichtung 12 schützt den Schwingungssensor 11 und dient der Schwingungsankopplung an die Maschine 24. Die Aufnahmevorrichtung 12 ist zum Beispiel aus Stahlblech gefertigt. Die Aufnahmevorrichtung 12 gewährleistet die Sensorankopplung. Die Schutztasche aus Stahlblech oder aus nichtmagnetischen Materialien wie bestimmten Stählen, Kunststoffen und anderen Materialien wird auf die zu überwachende Maschine 24 geklebt. Wenn die Maschine 24 aus magnetischen Materialien wie Stahl besteht, kann während der Aushärtung des Klebstoffs die Aufnahmevorrichtung 12 mittels eines Magneten mit geeignetem Anpressdruck an der Messstelle der Maschine 24 positioniert werden. Nach dem Aushärten wird dann der Magnet aus der Aufnahmevorrichtung 12 entnommen und dafür der Schwingungssensor 11 eingeschoben.

Alternativ kann die Aufnahmevorrichtung 12 magnetisch an der Maschine 24 gehalten werden. Der Kleber 32 kann dabei weggelassen werden.

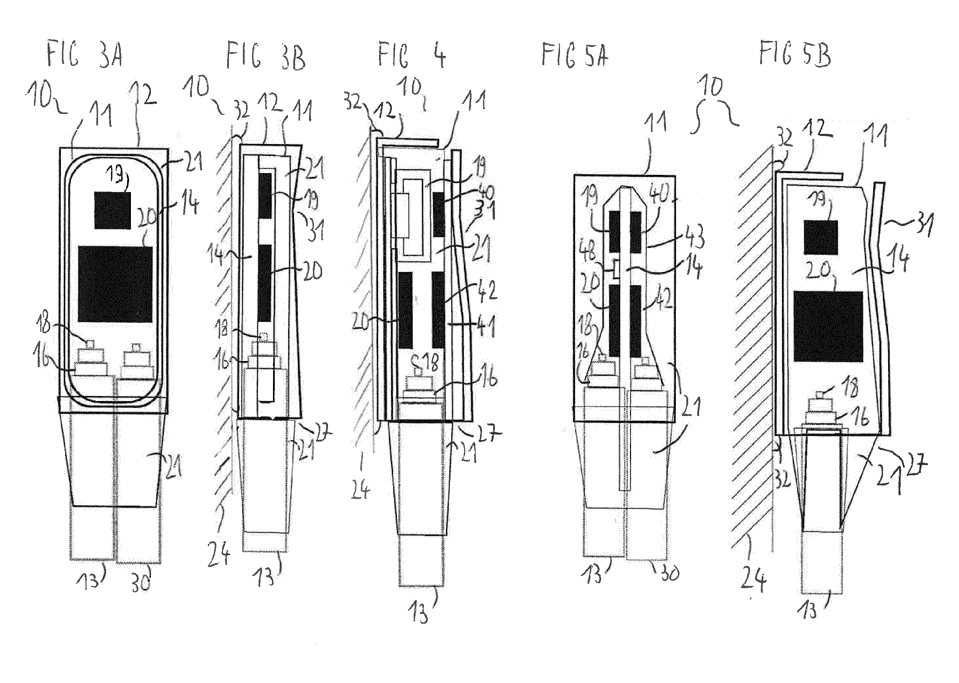

Figuren 3A und 3B zeigen eine weitere beispielhafte Ausführungsform der Sensoranordnung 10, die eine Weiterbildung der in den Figuren 1A, 1B, 2A und 2B gezeigten Ausführungsformen ist. Das Sensorelement 19 ist als MEMS-Sensorelement implementiert. Dabei ist MEMS die Abkürzung für mikroelektromechanisches System, englisch micro-electro-mechanical system. Das MEMS-Sensorelement kann als Mikrosensorelement bezeichnet werden. Der Schwingungssensor 11 misst in einem Frequenzbereich zwischen 0 und 2 kHz Schwingungen der Maschine 24. Der Schwingungssensor 11 ist als Niederfrequenzsensor ausgebildet.

Das Sensorelement 19 ist in SMD-Technik auf der Platine 14 montiert. Die Platine 14 dient der Schwingungsübertragung von der Maschine 24 zum Sensorelement 19. Die Platine 14 ist passend zur Messrichtung beziehungsweise zu den Messrichtungen der Sensoranordnung 10 angeordnet. Das Sensorelement 19 ist ein MEMS-Sensorelement, das für den Bereich von 0 bis 2 kHz zur Messung in einer Richtung ausgelegt ist. Das Sensorelement 19 misst in Richtung der Flächennormale des Sensorelements 19 und damit der Platine 14. Die Platine 14 wird parallel zur Oberfläche der Maschine 24 angeordnet, so dass Schwingungen in Richtung der Flächennormale der Oberfläche der Maschine 24 gemessen werden.

Figur 4 zeigt eine weitere beispielhafte Ausführungsform der Sensoranordnung 10, die eine Weiterbildung der in den obigen Figuren gezeigten Ausführungsformen ist. Der Schwingungssensor 11 ist als Kombisensor realisiert. Der Schwingungssensor 11 umfasst ein weiteres Sensorelement 40. Während das Sensorelement 19 als Piezosensorelement realisiert ist, ist das weitere Sensorelement 40 als MEMS-Sensorelement ausgebildet. Das Sensorelement 19 und das weitere Sensorelement 40 detektieren mechanische Schwingungen in unterschiedlichen Frequenzbereichen. Zusätzlich umfasst der Schwingungssensor 11 eine weitere Platine 41. Das weitere Sensorelement 40 ist auf der weiteren Platine 41 angebracht. Darüber hinaus umfasst der Schwingungssensor 11 eine weitere Verarbeitungsschaltung 42, die auf der weiteren Platine 41 angebracht ist. Die weitere Verarbeitungsschaltung 42 ist mit der Verarbeitungsschaltung 20 sowie dem Kabel 13 elektrisch leitend verbunden. Der Schwingungssensor 11 ist somit als Kombisensor realisiert. Der Kombisensor ist ausgelegt, Schwingungen der Maschine 24 in einem Frequenzbereich von 0 bis 20 kHz zu bestimmen. Der Schwingungssensor 11 ist als breitbandiger Sensor realisiert, der Schwingungen sowohl mit hohen wie auch mit niedrigen Frequenzen misst.

Der Schwingungssensor 11 ist in die Aufnahmevorrichtung 12 mit dem federnden Element 31 hineingesteckt. Das federnde Element 31 ist als Zunge implementiert. Das federnde Element 31 liegt auf dem Schwingungssensor 11 an. Der Bereich des Anliegens des federnden Elements 31 liegt der Seite der Aufnahmevorrichtung 12 gegenüber, durch die der Schwingungssensor 11 gesteckt wird. Das federnde Element 31 ist frei beweglich an der Seite, die der Seite gegenüberliegt, durch die der Schwingungssensor 11 hineingesteckt wird, und ist fixiert an der Seite, durch die der Schwingungssensor 11 hindurch gesteckt wird. Die Aufnahmevorrichtung 12 ist auf der Maschine 24 mittels des Klebers 32 fixiert. Die Aufnahmevorrichtung 12 kann als Blechtasche oder Schutztasche bezeichnet werden.

Figuren 5A und 5B zeigen eine weitere beispielhafte Ausführungsform der Sensoranordnung 10, die eine Weiterbildung der oben gezeigten Ausführungsformen ist. Figur 5A zeigt den Schwingungssensor 11, während Figur 5B den Schwingungssensor 11 in der Aufnahmevorrichtung 12 im Querschnitt zeigt. Im Unterschied zu den oben gezeigten Ausführungsformen ist in den Figuren 5A und 5B die Platine 14 senkrecht zur Maschine 24 angeordnet. Eine Flächennormale auf der Platine 14 bildet somit einen 90°-Winkel zur Flächennormale auf der Oberfläche der Maschine 24. Der Schwingungssensor 11 ist als Kombisensor implementiert und bestimmt Schwingungen im Frequenzbereich zwischen 0 bis 20 kHz. Der Schwingungssensor 11 umfasst das Sensorelement 19 sowie das weitere Sensorelement 40. Das Sensorelement 19 ist als Hochfrequenzsensorelement ausgelegt, misst Schwingungen in einer Richtung in einem Frequenzbereich von 10 Hz bis 20 kHz. Die Richtung kann auch als Achse bezeichnet werden. Das weitere Sensorelement 40 ist als Niederfrequenzsensorelement ausgelegt, misst Schwingungen in drei Richtungen in einem Frequenzbereich von 0 Hz bis 2 kHz.

Das Sensorelement 19 und das weitere Sensorelement 40 sind auf gegenüberliegenden Seiten der Platine 14 angeordnet. Zusätzlich umfasst der Schwingungssensor 11 die Verarbeitungsschaltung 20 sowie die weitere Verarbeitungsschaltung 42, die auf den gegenüberliegenden Seiten der Platine 14 angeordnet sind. Die Platine 14 ist somit beidseitig bestückt. Die Platine 14 befindet sich zwischen dem Kabel 13 und dem weiteren Kabel 30. Zwischen dem Kunststoffgehäuse 21 und dem Sensorelement 19 ist eine elektrische Abschirmung 43 angeordnet. Der Schwingungssensor 11 weist zusätzlich ein Temperatursensorelement 48 auf. Das Temperatursensorelement 48 ist auf der Platine 14 angeordnet.

Die Aufnahmevorrichtung 12 ist als Schutztasche implementiert. Der Schutz durch die Aufnahmevorrichtung 12 ist für 7 Joule bei 12 mm Schlagradius ausgelegt. Das Sensorelement 19 misst Schwingungen in zwei Richtungen. Beispielsweise misst ein als MEMS-Sensorelement realisiertes Sensorelement 19 Schwingungen in zwei Richtungen. Dabei verlaufen die Messrichtungen in zwei verschiedene Richtungen in der Ebene der Platine 14 senkrecht zur Flächennormale der Platine 14. Um Schwingungen in Richtung der Flächennormalen der Oberfläche der Maschine 24 zu messen, ist die Platine 14 mit dem Sensorelement 19 so angeordnet, dass eine Messrichtung des Sensorelements 19 senkrecht zu einer Kante der Platine 14 verläuft und dass die genannte Kante der Platine 14 der Oberfläche der Maschine 24 zugewandt ist.

In einer alternativen Ausführungsform misst das als Piezosensorelement hergestellte Sensorelement 19 in zwei Richtungen.

Figuren 6A bis 6C zeigen weitere beispielhafte Ausführungsformen der Sensoranordnung 10, die Weiterbildungen der oben gezeigten Ausführungsformen sind. Während Figur 6A einen Schwingungssensor 11 in Aufsicht zeigt, zeigen Figuren 6B und 6C verschiedene Aufnahmevorrichtungen 12 im Querschnitt mit dem in Figur 6A gezeigten Schwingungssensor 11. Der Schwingungssensor 11 ist ebenfalls als Kombisensor implementiert. Der Schwingungssensor 11 umfasst das Sensorelement 19, das auf der Platine 14 angeordnet ist, und das weitere Sensorelement 40, das auf der weiteren Platine 41 angeordnet ist. Das Sensorelement 19 und das weitere Sensorelement sind wie in den Figuren 5A und 5B ausgelegt. Auf der Platine 14 befindet sich zusätzlich die Verarbeitungsschaltung 20, während die weitere Verarbeitungsschaltung 42 auf der weiteren Platine 41 angeordnet ist. Zusätzlich ist eine Auswerteelektronik 44 auf der Platine 14 und eine weitere Auswerteelektronik 45 auf der weiteren Platine 41 angeordnet. Das als Piezosensorelement realisierte Sensorelement 19 misst in einer Richtung. Die Messrichtung des Piezosensorelements ist bei Lagern radial und bei Planetengetrieben tangential. Das als MEMS-Sensorelement realisierte weitere Sensorelement 40 misst in drei Richtungen. Weiter weist der Schwingungssensor 11 die Ausnehmung 22 auf.

Gemäß Figur 6B ist die Aufnahmevorrichtung 12 als Schutzhaube implementiert. Die Aufnahmevorrichtung 12 wird mittels der Schraube 23 in die Gewindebohrung 25 der Maschine 24 geschraubt. Die Schraube 23 ist als Zentralschraube realisiert. Die Schraube 23 zeigt eine federnde Wirkung. Zwischen der Aufnahmevorrichtung 12 und dem Schwingungssensor 11 befindet sich zusätzlich die Feder 26. Die Feder 26 ist dabei als O-Ring implementiert. Vergleichbar zu den Figuren 1A und 1B kann nach Lösen der Schraube 23 die Aufnahmevorrichtung 12 von der Maschine 24 entfernt werden und damit der Schwingungssensor 11 von der Maschine 24 gelöst werden. Die Aufnahmevorrichtung 12 hat die Form eines Winkels. Die Aufnahmevorrichtung 12 ist an der der Maschine 24 zugewandten Seite offen. Somit sind zwei Seiten der Aufnahmevorrichtung 12 offen, nämlich die der Maschine 24 zugewandte Seite und die Seite mit der Ausnehmung 27 zum Einschub des Schwingungssensors 11. Die Aufnahmevorrichtung 12 ist nicht zwischen dem Schwingungssensor 11 und der Maschine 24 angeordnet. Die Aufnahmevorrichtung 12 bedeckt ausschließlich Seiten des Schwingungssensors 11, die nicht der Maschine 24 zugewandt sind.

Gemäß Figur 6C ist die Aufnahmevorrichtung 12 als Schutzkäfig implementiert. Die Aufnahmevorrichtung 12 weist einen Bolzen 46 auf, der fest mit den weiteren Teilen der Aufnahmevorrichtung 12 verbunden ist. Der Schwingungssensor 11 wird auf dem Bolzen 46 aufgesteckt und mittels einer Mutter 47 fixiert. Zwischen der Mutter 47 und dem Schwingungssensor 11 ist die Feder 26 angeordnet. Die Feder 26 ist dabei als O-Ring realisiert. Die Aufnahmevorrichtung 12 ist an der Maschine 24 mittels des Klebers 32 befestigt.

Figuren 7A und 7B zeigen beispielhafte Ausführungsformen der Maschine 24 mit der Sensoranordnung 10, die Weiterbildungen der oben gezeigten Ausführungsformen sind. Gemäß Figur 7A ist die Aufnahmevorrichtung 12 über die Schraube 23 sowie eine weitere Schraube 50 an der Maschine 24 befestigt. Die Aufnahmevorrichtung 12 kann auch als Schutzbügel realisiert sein.

Hingegen ist in Figur 7B die Aufnahmevorrichtung 12 über den Kleber 32 mit der Maschine 24 verbunden. Gemäß den Figuren 2A, 2B, 3A, 3B, 4, 5A, 5B, 6C und 7B wird die Aufnahmevorrichtung 12 an die Maschine 24 geklebt. Dabei wird die Aufnahmevorrichtung 12 ohne Sensoranordnung 11 auf der Maschine 24 mittels des Klebers 32 befestigt. Beim Aushärten des Klebers 32 ist der Schwingungssensor 11 noch nicht in der Aufnahmevorrichtung 12. Ein Magnet ist in der Aufnahmevorrichtung 12 eingelegt, der die Aufnahmevorrichtung 12 während des Aushärtens des Klebers 32 auf der Maschine 24 festhält. Nach dem Aushärten des Klebers 32 wird der Magnet entfernt und der Schwingungssensor 11 in die Aufnahmevorrichtung 12 gesteckt. Alternativ kann die Aufnahmevorrichtung 12 während des Aushärtens des Klebers 32 mit einem Werkzeug wie einer Schraubzwinge oder einem Spanngurt gehalten werden. Anschließend wird der Schwingungssensor 11 in der Aufnahmevorrichtung mittels der Schraube 23 angeschraubt. Anstelle des Klebers 32 kann auch ein Lot verwendet werden.

### Bezugszeichenliste

- 10: Sensoranordnung
- 11: Schwingungssensor
- 12: Aufnahmevorrichtung
- 13: Kabel
- 14: Platine
- 15: erste Verbindungsstelle
- 16: Außenleiter
- 17: zweite Verbindungsstelle
- 18: Innenleiter
- 19: Sensorelement
- 20: Verarbeitungsschaltung
- 21: Kunststoffgehäuse
- 22: Ausnehmung
- 23: Schraube
- 24: Maschine
- 25: Gewindebohrung
- 26: Feder
- 27: Ausnehmung
- 30: weiteres Kabel
- 31: federndes Element
- 32: Kleber
- 40: weiteres Sensorelement
- 41: weitere Platine
- 42: weitere Verarbeitungsschaltung
- 43: elektrische Abschirmung
- 44: Auswerteschaltung
- 45: weitere Auswerteschaltung
- 46: Bolzen
- 47: Mutter
- 48: Temperatursensorelement
- 50: weitere Schraube

## Patentansprüche

1. Sensoranordnung, umfassend
- einen Schwingungssensor (11), der ein Kabel (13) und ein staubdichtes, wasserdichtes und elektrisch isolierendes Kunststoffgehäuse (21), aus dem das Kabel (13) herausgeführt ist, umfasst und frei von einem Metallgehäuse ist, und
- eine Aufnahmevorrichtung (12), die mit dem Schwingungssensor (11) lösbar verbunden ist und ausgelegt ist, den Schwingungssensor (11) mechanisch zu schützen und zu fixieren.

2. Sensoranordnung nach Anspruch 1,
bei der der Schwingungssensor (11) als inertialer Schwingungssensor realisiert ist.

3. Sensoranordnung nach Anspruch 1 oder 2,
der Schwingungssensor (11) umfassend ein Sensorelement (19) und eine Platine (14), auf der das Sensorelement (19) befestigt ist und die mit dem Kabel (13) elektrisch leitend verbunden ist.

4. Sensoranordnung nach Anspruch 3,
der Schwingungssensor (11) umfassend ein weiteres Sensorelement (40), wobei das Sensorelement (19) und das weitere Sensorelement (40) mechanische Schwingungen in unterschiedlichen Frequenzbereichen detektieren.

5. Sensoranordnung nach einem der Ansprüche 1 bis 4,
bei der der Schwingungssensor (11) ein spezifisches Gewicht kleiner 3 g/cm³ aufweist, wobei Hohlräume im Schwingungssensor (11) nicht berücksichtigt sind.

6. Sensoranordnung nach einem der Ansprüche 1 bis 5,
bei der der Schwingungssensor (11) und die Aufnahmevorrichtung (12) formschlüssig und/oder kraftschlüssig miteinander verbunden sind.

7. Sensoranordnung nach einem der Ansprüche 1 bis 6,
bei der der Schwingungssensor (11) in die Aufnahmevorrichtung (12) eingeschraubt, angeschraubt, eingeklickt, eingerastet, eingelegt oder eingepresst ist.

8. Sensoranordnung nach einem der Ansprüche 1 bis 7,
bei der die Aufnahmevorrichtung (12) eine Ausnehmung (27) auf einer Seite zum Hindurchführen des Schwingungssensors (11) aufweist und der Schwingungssensor (11) in die Aufnahmevorrichtung (12) steckbar ist.

9. Sensoranordnung nach einem der Ansprüche 1 bis 8,
bei der die Aufnahmevorrichtung (12) aus Metall, insbesondere Edelstahl, realisiert ist.

10. Sensoranordnung nach einem der Ansprüche 1 bis 9,
bei der die Aufnahmevorrichtung (12) als Schutztasche, Schutzhaube, Schutzkäfig, Schutzmantel oder Schutzbügel ausgebildet ist.

11. Maschine mit der Sensoranordnung nach einem der Ansprüche 1 bis 10,
bei der die Aufnahmevorrichtung (12) an der Maschine (24) mittels eines Befestigungsmittels (23, 32) fixiert ist.

12. Verfahren zum Herstellen einer Sensoranordnung, umfassend:
- Befestigen einer Aufnahmevorrichtung (12) an einer Maschine (24), deren Schwingungen zu überwachen sind, und
- Einfügen eines Schwingungssensor (11), der ein Kunststoffgehäuse (21) und ein Kabel (13) umfasst und frei von einem Metallgehäuse ist, in die Aufnahmevorrichtung (12), wobei das Kunststoffgehäuse (21) als staubdichtes, wasserdichtes und elektrisch isolierendes Kunststoffgehäuse realisiert ist, aus dem das Kabel (13) herausgeführt ist, und
die Aufnahmevorrichtung (12) mit dem Schwingungssensor (11) lösbar verbunden ist und ausgelegt ist, den Schwingungssensor (11) mechanisch zu schützen und an der Maschine (24) zu fixieren.

13. Verfahren nach Anspruch 12,
bei dem die Aufnahmevorrichtung (12) mittels eines Klebers (32) an der Maschine (24) befestigt wird und während des Aushärtens des Klebers (32) ein Magnet die Aufnahmevorrichtung (12) an der Maschine (24) fixiert.
